# EUROPEAN PATENT APPLICATION

(11) **EP 3 064 387 A1**
(43) Date of publication of application: **07.09.2016**
(21) Application number: 14857920.4
(22) Date of filing: 16.09.2014
(51) Int. Cl.: B60J 7/057

(54) **VEHICULAR OPEN/CLOSE MEMBER CONTROL DEVICE AND CONTROL METHOD**

(30) Priority: 29.10.2013 JP 2013224064
(71) Applicant: Aisin Seiki Kabushiki Kaisha, Kariya-shi, Aichi 448-8650 (JP)
(72) Inventor: URASE, Hiroshi, Kariya-shi Aichi 448-8650 (JP); BESSHO, Nobuyasu, Kariya-shi Aichi 448-8650 (JP); TANOI, Tsutomu, Kariya-shi Aichi 448-8650 (JP); MAEDA, Toshiro, Kariya-shi Aichi 448-8650 (JP)
(74) Representative: Intès, Didier Gérard André
(86) International application number: PCT/JP2014/004752
(87) International publication number: WO 2015/063998

(57) **Abstract**

One embodiment of the present invention provides a control device for a vehicle opening-closing member, comprising: a drive motor configured to perform closing drive of an opening-closing member provided in a vehicle by rotating in a first direction and perform opening drive of the opening-closing member by rotating in a second direction opposite to the first direction; a controller configured to control a start operation of rotation of the drive motor and a direction of the rotation of the drive motor by outputting a control signal for switching connection of a switching portion; and a detector configured to output a signal indicating the direction of the rotation of the drive motor to the controller, the controller determines presence or absence of sticking of the switching portion on the closing drive side, based on the signal from the detector, and when determining that the sticking is present, the controller performs at least one of cut-off of supply of power to the drive motor and output of a control signal for activating a warning device configured to give warning to a user.

## Description

### Technical Field

The present invention relates to a control device and a control method for a vehicle opening-closing member which achieve fail safe against sticking of a switching portion used to switch rotation of a drive motor for the vehicle opening-closing member.

### Background Art

A technique of electrically opening and closing an opening-closing member such as a roof of a vehicle by drive of a motor is conventionally known (see Patent Document 1). In the control technique of Patent Document 1, a front portion and a rear portion of a roof are driven separately to perform opening and closing drive of the roof. In the control technique of Patent Document 1, the rotating direction of a drive motor for driving the roof is controlled by switching on and off a relay connected to the drive motor, and the opening-closing direction of the roof is thereby controlled.

### Citation List

### Patent Document

Patent Document 1: Japanese Patent Application Laid-Open No. 2007-160959

### Summary of Invention

### Technical Problem

An object is sometimes trapped between the vehicle opening-closing member and a vehicle body during a closing operation of the opening-closing member. In this case, in the technique of Patent Document 1, after trapping of an object is detected, the relay is switched to reverse the rotating direction of the drive motor and the opening drive of the opening-closing member is performed. The load applied to the trapped object is thereby released. However, the technique of Patent Document 1 has a problem that the opening drive of the opening-closing member cannot be performed when the trapping occurs in a situation where the relay is stuck on the closing drive side. Moreover, it is desirable that in a situation where the relay is stuck on the closing drive side and then an object is trapped by the closing drive of the opening-closing member being performed, the load applied to the object is reduced.

In view of the problems described above, an object of the present invention is to provide a control device and a control method for a vehicle opening-closing member which achieve fail safe against sticking of a switching portion used to switch rotation of a drive motor for the vehicle opening-closing member.

### Solution to Problem

One embodiment of the present invention provides a control device for a vehicle opening-closing member, comprising: a drive motor configured to perform closing drive of an opening-closing member provided in a vehicle by rotating in a first direction and perform opening drive of the opening-closing member by rotating in a second direction opposite to the first direction; a controller configured to control a start operation of rotation of the drive motor and a direction of the rotation of the drive motor by outputting a control signal for switching connection of a switching portion; and a detector configured to output a signal indicating the direction of the rotation of the drive motor to the controller, the controller determines presence or absence of sticking of the switching portion on the closing drive side, based on the signal from the detector, and when determining that the sticking is present, the controller performs at least one of cut-off of supply of power to the drive motor and output of a control signal for activating a warning device configured to give warning to a user.

### Advantageous Effects of Invention

The control device and the control method for a vehicle opening-closing member in one embodiment of the present invention can notify the user that an opening operation of the opening-closing member provided in the vehicle cannot be performed due to sticking of the switching portion. Accordingly, the user can avoid driving of the opening-closing member and be more careful of trapping. Moreover, the control device and the control method for a vehicle opening-closing member in one embodiment of the present invention can reduce load applied to an object even when the object is trapped in a situation where the switching portion is stuck on the closing drive side.

### Brief Description of Drawings

Fig. 1A is a schematic configuration view of a power sunroof unit.
Fig. 1B is a schematic configuration view of a power window unit.
Fig. 2 is a block diagram of a control device in a first embodiment.
Fig. 3A is a control flowchart of a vehicle opening-closing member in the first embodiment.
Fig. 3B is a timing chart depicting relationships among ON and OFF of transistors and the like in the first embodiment.
Fig. 4A is a control flowchart of a vehicle opening-closing member in a second embodiment.
Fig. 4B is a timing chart depicting relationships among ON and OFF of transistors and the like in the second embodiment.
Fig. 5 is a block diagram of a control device in a third embodiment.
Fig. 6A is a control flowchart of a vehicle opening-closing member in a third embodiment.
Fig. 6B is a timing chart depicting relationships among ON and OFF of transistors and the like in the third embodiment.

### Description of Embodiments

Exemplary embodiments for carrying out the present invention are described in detail with reference to the drawings. However, dimensions, materials, shapes, positions of components relative to one another, and the like which are described in the following embodiments can be set as desired and changed depending on various conditions and the structure of a device to which the present invention is applied. Moreover, unless otherwise noted, the scope of the present invention is not limited to the modes specifically described in the embodiments described below. Note that, in the drawings described below, parts having the same function are denoted by the same reference numeral and overlapping description thereof is omitted in some cases.

### [First Embodiment]

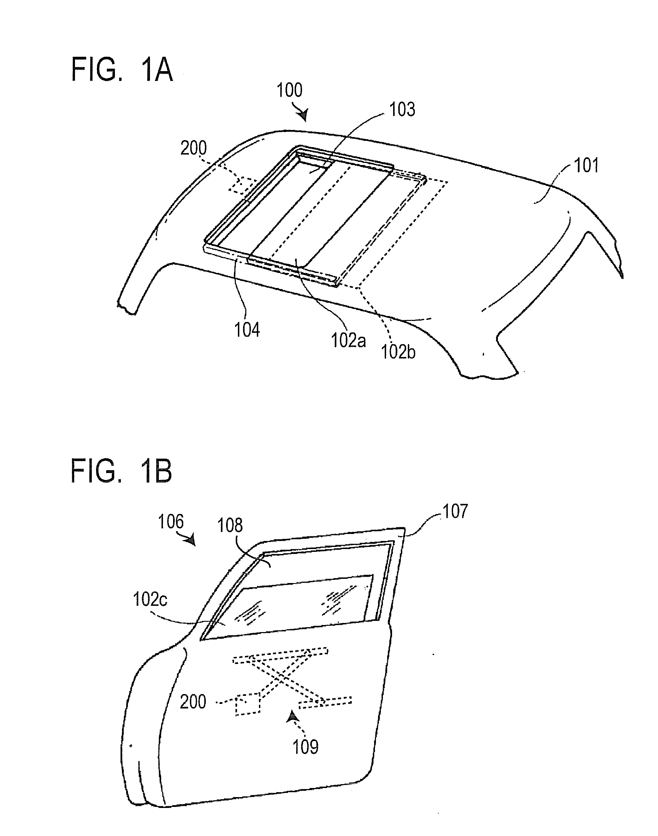

Figs. 1A and 1B are schematic configuration views of a power sunroof unit 100 and a power window unit 106.

Fig. 1A illustrates the power sunroof unit 100 including: a roof panel 102a and a shade panel 102b which are opening-closing members (vehicle opening-closing members) provided in a vehicle; and a control device 200 for the vehicle opening-closing members. The roof panel 102a opens and closes an opening portion 103 formed in a vehicle roof 101. The shade panel 102b is arranged below the roof panel 102a and adjusts the amount of light entering from the opening portion 103. The roof panel 102a and the shade panel 102b are movably supported on a guide plate 104 provided along an inner edge of the opening portion 103. The user can operate an opening-closing switch 110 (opening-closing instruction portion) installed at a desired position in the vehicle to perform electrical opening and closing drive of the roof panel 102a and the shade panel 102b. Specifically, a signal instructing the opening drive or closing drive of the roof panel 102a and the shade panel 102b is outputted from the opening-closing switch 110 to the control device 200. In response to this signal, the control device 200 causes a drive motor 209 to rotate and move the roof panel 102a and the shade panel 102b along the guide plate 104 in a front-rear direction of the vehicle via gears and belts (not illustrated). Note that the user can independently drive the roof panel 102a and the shade panel 102b.

Fig. 1B illustrates the power window unit 106 including: a window glass 102c which is an opening-closing member provided in the vehicle; and a control device 200 for the vehicle opening-closing member. One end of the window glass 102c is fixed to a lifting-lowering mechanism 109 and the window glass 102c opens and closes an opening portion 108 formed in a door frame 107, according to movement of the lifting-lowering mechanism 109. The user can operate the opening-closing switch 110 to perform electrical opening and closing drive of the window glass 102c. Specifically, a signal (opening-closing signal) instructing the opening drive or closing drive of the window glass 102c is outputted from the opening-closing switch 110 to the control device 200. In response to this signal, the control device 200 controls the drive motor 209 and the drive motor 209 moves the window glass 102c in a up-down direction of the vehicle via the lifting-lowering mechanism 109.

In the following description, the opening-closing member is assumed to be the roof panel 102a and a switching portion is assumed to be relays 206 to 208 for simplification of explanation. Note that the opening-closing member may be the shade panel 102b, the window glass 102c, or another opening-closing member (for example, a hood or a fuel lid) provided in the vehicle.

### <Control Device of Vehicle Opening-Closing Member>

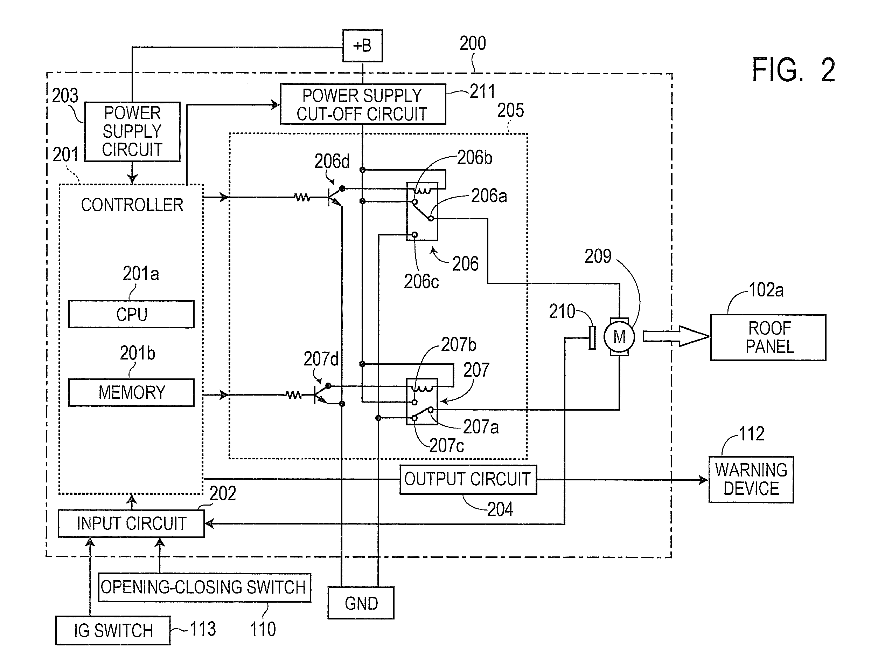

Fig. 2 is a functional block diagram of the control device 200 for the vehicle opening-closing member. As illustrated in Fig. 2, the control device 200 includes a controller 201, an input circuit 202, a power supply circuit 203, an output circuit 204, a drive circuit 205, the drive motor 209, a pulse sensor 210, and a power supply cut-off circuit 211. Note that the control device 200 may further include hardware elements such as an oscillator and a counter circuit which provide a clock frequency.

The controller 201 is an ECU (Electronic Control Unit) including a CPU (Central Processing Unit) 201a, a memory 201b, and the like and has a predetermined function of controlling the drive of the opening-closing member by processing inputted signals through cooperation of the CPU 201a and the memory 201b. The CPU 201a performs computation processing for achieving the predetermined function. The memory 201b includes a ROM (Read Only Memory) for storing programs, a RAM (Random Access Memory) for temporary storage, and the like. The function of the controller 201 may be implemented as a software program stored in the memory 201b and executed by the CPU 201a or as a hardware element mounted in the controller 201.

The input circuit 202 includes an A/D convertor, an amplifier, and the like and converts signals from the opening-closing switch 110, an ignition (IG) switch 113, and the pulse sensor 210 into digital signals processable by the controller 201. The power supply circuit 203 includes a DC-DC convertor and converts a battery voltage (V_{B}) of a battery power supply +B of the vehicle to a voltage usable in the controller 201. The output circuit 204 includes a D/A convertor, an amplifier, and the like and converts a control signal from the controller 201 to a signal usable in a warning device 112.

The warning device 112 is installed at a desired position in the vehicle and gives warning to the user in response to the control signal from the controller 201 by emitting lights and sounds or by displaying a content of the warning. Moreover, the IG switch 113 outputs signals indicating start and stop of an engine (or power supply) of the vehicle to controller 201. The controller 201 can recognize start and stop of the engine (or power supply) of the vehicle, based on this signal.

A drive circuit 205 includes relays (switching portions) 206, 207 and transistors 206d, 207d. A terminal 206b of the relay 206 is connected to the battery power supply +B via the power supply cut-off circuit 211, a terminal 206c of the relay 206 is connected to the ground GND, and a terminal 206a of the relay 206 is connected to the drive motor 209. A terminal 207a of the relay 207 is connected to the drive motor 209, a terminal 207b of the relay 207 is connected to the battery power supply +B via the power supply cut-off circuit 211, and a terminal 207c of the relay 207 is connected to the ground GND. Note that the drive circuit 205 may include other elements such as a resistance and a capacitor, as necessary.

The controller 201 controls currents flowing through solenoids of the relays 206, 207 by turning ON and OFF the transistors 206d, 207d, and can thereby switch connection destinations of the relays 206, 207. The terminal 206a of the relay 206 and the terminal 207a of the relay 207 are in a state connected to the ground GND by default. When the transistors 206d, 207d are turned ON, the currents flow through the solenoids of the relays 206, 207 and the terminals 206a, 207a are connected to the battery power supply +B. In detail, the controller 201 connects the terminal 206a of the relay 206 to the battery power supply +B (connects the terminals 206b and 206a) by turning ON the transistor 206d and connects the terminal 206a of the relay 206 to the ground GND (connects the terminals 206c and 206a) by turning OFF the transistor 206d. Moreover, the controller 201 connects the terminal 207a of the relay 207 to the battery power supply +B (connects the terminals 207b and 207a) by turning ON the transistor 207d and connects the terminal 207a of the relay 207 to the ground GND (connects the terminals 207a and 207c) by turning OFF the transistor 207d.

To put is differently, the controller 201 can cause the drive motor 209 to "rotate in a normal direction (or in a reverse direction)" and perform "closing drive" of the roof panel 102a by connecting the relay 206 to the battery power supply +B and connecting the relay 207 to the ground GND. Meanwhile, the controller 201 can cause the drive motor 209 to "rotate in the reverse direction (or in the normal direction" and perform "opening drive" of the roof panel 102a by connecting the relay 206 to the ground GND and connecting the relay 207 to the battery power supply +B. Moreover, the controller 201 can "stop" the rotation of the drive motor 209 and "stop" the roof panel 102a by connecting both of the relay 206 and the relay 207 to the battery power supply +B or the ground GND. As described above, the controller 201 can control the start and stop of the rotation of the drive motor 209 and the direction (normal direction and reverse direction) of the rotation by controlling the voltage supplied from the battery power supply +B of the vehicle to the drive motor 209.

Table 1 depicts relationships among ON and OFF of the transistors 206d, 207 and the normal rotation, the reverse rotation, and the stop of the drive motor 209. Note that ON and OFF of the transistors 206d, 207d may be opposite to those depicted below.

**[Table 1]**

| | 207d is ON | 207d is OFF |
|---|---|---|
| 206d is ON | Stop | Normal rotation |
| 206d is OFF | Reverse rotation | Stop |

The pulse sensor 210 includes a hall element or the like as a detector for detecting the rotation of the drive motor 209, and outputs a pair of signals which correspond to the rotation of the drive motor 209 and which are different in phase, to the controller 201. The controller 201 can determine the rotating direction (normal rotation or reverse rotation) of the drive motor 209 based on the signals from the pulse sensor 210.

The power supply cut-off circuit 211 includes a resistance, a relay, a ground terminal, and the like. The power supply cut-off circuit 211 operates in response to a control signal from the controller 201 and can cut off or restore supply of power to the drive motor 209. The power supply cut-off circuit 211 is used mainly to perform emergency stop of the rotation of the drive motor 209.

### <Method of Controlling Vehicle Opening-Closing Member>

Description is given of a method of controlling the vehicle opening-closing member by the control device in the embodiment. After receiving a sticking detection trigger, the control device in the embodiment performs monitoring for presence or absence of sticking of the relays on the closing drive side. When the sticking is absent, the control device allows the drive of the opening-closing member. When the sticking is present, the control device activates the warning device and gives warning to the user.

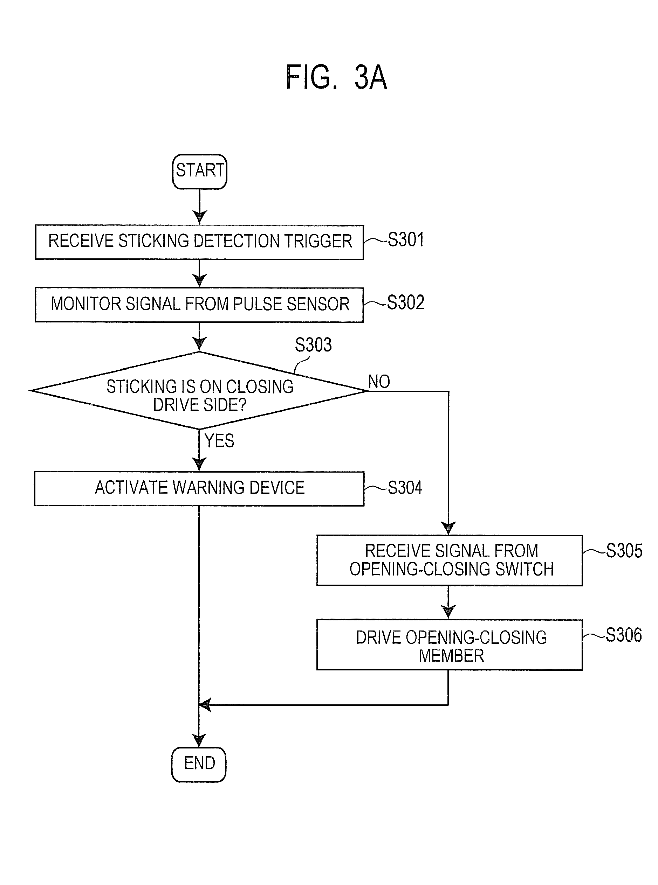

Fig. 3A is a flowchart of control of the roof panel 102a being the opening-closing member which is performed by the control device 200 for the vehicle opening-closing member.

In step S301, the controller 201 of the control device 200 receives the sticking detection trigger for starting detection of the sticking of the relays. The sticking detection trigger may be the signal from the IG switch 113 indicating the start of the engine (or power supply) of the vehicle, the signal from the opening-closing switch 110 indicating the opening or closing drive of the roof panel 102a, or a signal indicating completion of the drive of the roof panel 102a. To put it differently, the controller 201 may be configured to execute steps S302, S303 and determine the presence or absence of the sticking of the relays when receiving the signal indicating start of the engine (power supply) of the vehicle or the signal indicating opening or closing drive of the roof panel 102a. Moreover, the controller 201 may be configured to automatically execute steps S302, S303 and determine the presence or absence of the sticking of the relays after the drive of the roof panel 102a is completed. Furthermore, the sticking detection trigger may be a predetermined signal generated regularly (for example, every several hours).

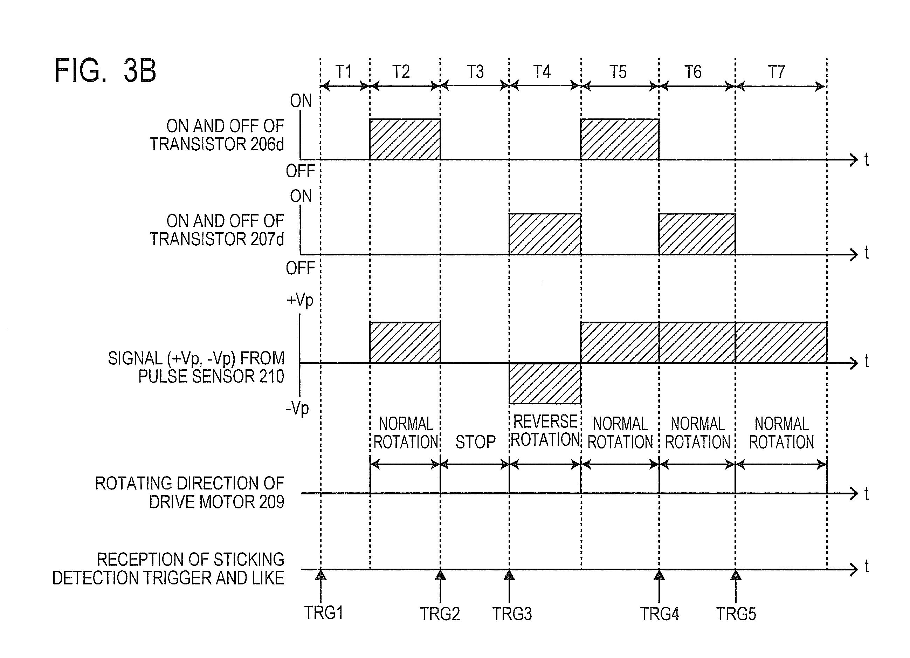

In step S302, the controller 201 monitors the signal from the pulse sensor 210. In step S303, the controller 201 determines whether the sticking of the relays 206, 207 on the closing drive side is present or absent. This operation is described in detail based on Fig. 3B.

Fig. 3B is a timing chart depicting relationships among ON and OFF of the transistor 206d, ON and OFF of the transistor 207d, the signal (+Vp, -Vp) from the pulse sensor 210, the rotating direction of the drive motor 209, and the reception of the sticking detection trigger. The following case is assumed.

In a first period T1, the signal indicating the start of the engine of the vehicle is inputted from the IG switch 113 and the vehicle is started. In a subsequent second period T2, the opening-closing switch 110 is operated, and the controller 201 turns ON the transistor 206d and turns OFF the transistor 207d to cause the drive motor 209 to rotate in the normal direction. During this operation, the controller 201 receives the signal (+Vp) indicating the normal rotation of the drive motor 209 from the pulse sensor 210. In a subsequent third period T3, the controller 201 turns OFF both transistors 206d, 207d to stop the rotation of the drive motor 209. In this case, the controller 201 receives no signal from the pulse sensor 210. In a subsequent fourth period T4, the opening-closing switch 110 is operated, and the controller 201 turns OFF the transistor 206d and turns ON the transistor 207d to cause the drive motor 209 to rotate in the reverse direction. During this operation, the controller 201 receives the signal (-Vp) indicating the reverse rotation of the drive motor 209 from the pulse sensor 210. In a subsequent fifth period T5, the opening-closing switch 110 is operated, and the controller 201 turns ON the transistor 206d and turns OFF the transistor 207d to cause the drive motor 209 to rotate in the normal direction. During this operation, the controller 201 receives the signal (+Vp) indicating the normal rotation of the drive motor 209 from the pulse sensor 210. Then, assume that the sticking of the relays 206, 207 on the closing drive side occurs after the fifth period T5. In a subsequent sixth period T6, the opening-closing switch 110 is operated, and the controller 201 turns OFF the transistor 206d and turns ON the transistor 207d to cause the drive motor 209 to rotate in the reverse direction. During this operation, the controller 201 receives the signal indicating the normal rotation of the drive motor 209 from the pulse sensor 210. In a subsequent seventh period T7, although the opening-closing switch 110 is not operated, the controller 201 receives the signal indicating the normal rotation of the drive motor 209 from the pulse sensor 210.

In the embodiment, a sticking detection trigger TRG1 is assumed to be the signal from the IG switch indicating the start of the engine (or power supply) of the vehicle, and a sticking detection trigger TRG 2 is assumed to be the signal indicating completion of the drive of the roof panel 102a. Moreover, sticking detection triggers TRG3, TRG4 are assumed to be the signal from the opening-closing switch 110 instructing the opening drive of the roof panel 102a, and a sticking detection trigger TRG5 is assumed to be the signal indicating completion of the drive of the roof panel 102a.

In the case of Fig. 3B, when receiving the sticking detection trigger TRG1 (S301), the controller 201 monitors the signal from the pulse sensor 210 (S302). Since the controller 201 receives no signal from the pulse sensor 210, the controller 201 can determine that the relays 206, 207 are not stuck on the closing drive side (No in S303).

When receiving the sticking detection trigger TRG2 (S301), the controller 201 monitors the signal from the pulse sensor 210 (S302). Since the controller 201 receives no signal from the pulse sensor 210, the controller 201 can determine that the relays 206, 207 are not stuck on the closing drive side (No in S303).

When receiving the sticking detection trigger TRG3 (S301), the controller 201 monitors the signal from the pulse sensor 210 (S302). The rotating direction (reverse direction) of the drive motor 209 indicated by the signal from the pulse sensor 210 matches the rotating direction (reverse direction) intended by the controller 201. Accordingly, the controller 201 can determine that the relays 206, 207 are not stuck on the closing drive side (No in S303).

When receiving the sticking detection trigger TRG4 (S301), the controller 201 monitors the signal from the pulse sensor 210 (S302). The rotating direction (normal direction) of the drive motor 209 indicated by the signal from the pulse sensor 210 does not match the rotating direction (reverse direction) indented by the controller 201. Accordingly, the controller 201 can determine that the relays 206, 207 are stuck on the closing drive side (Yes in S303).

When receiving the sticking detection trigger TRG5 (S301), the controller 201 monitors the signal from the pulse sensor 210 (S302). Although the controller 201 is not causing the drive motor 209 to rotate, the signal from the pulse sensor 210 indicates that the drive motor 209 is rotating in the normal direction. Accordingly, the controller 201 can determine that the relays 206, 207 are stuck on the closing drive side (Yes in S303).

As described above, after receiving the sticking detection trigger, the controller 201 can determine presence or absence of sticking of the relays 206, 207 on the closing drive side, based on the signal from the pulse sensor 210.

Next, returning to the description of the steps in Fig. 3A, when the relays 206, 207 are stuck on the closing drive side (Yes in S304), the controller 201 outputs the control signal to the warning device 112 in step S305. In response to this control signal, the warning device 112 gives warning to the user by emitting light and sound or by displaying a content of the warning. For example, the controller 201 can announce that "the roof panel will not open due to failure, so please do not use the opening-closing switch" in the vehicle or display the content of the warning on a screen of a navigation device installed in the vehicle. Moreover, when the relays are stuck, the controller 201 may receive no signal from the opening-closing switch 110 upon operation of the opening-closing switch 110 by the user and perform no opening and closing drive of the roof panel 102a.

Assume that the controller 201 receives a signal from the opening-closing switch 110 instructing the opening drive or the closing drive of the roof panel 102a in step S305 in the case where the relays 206, 207 are not stuck on the closing drive side (No in S304). In this case, in step S306, the controller 201 performs the opening or closing drive of the roof panel 102a by controlling ON and OFF of the transistors 206d, 207d and controlling the rotation of the drive motor 209.

As described above, the user can notice that the roof panel 102a does not operate in the opening direction due to the sticking of the relays 206, 207, and thereby avoid a situation where the opening operation of the opening-closing member is not performed when an object is trapped. The control device and the control method for the vehicle opening-closing member in the embodiment thereby achieve fail-safe against the sticking of the relays.

### [Second Embodiment]

Description is given of a control device and a control method for a vehicle opening-closing member in a second embodiment of the present invention. Note that the configurations of the vehicle opening-closing member and the control device for the vehicle opening-closing member in the embodiment are substantially the same as those in the first embodiment, and description thereof is omitted.

The control device and the control method for the vehicle opening-closing member in the embodiment achieve fail safe against sticking of relays while improving convenience of a user.

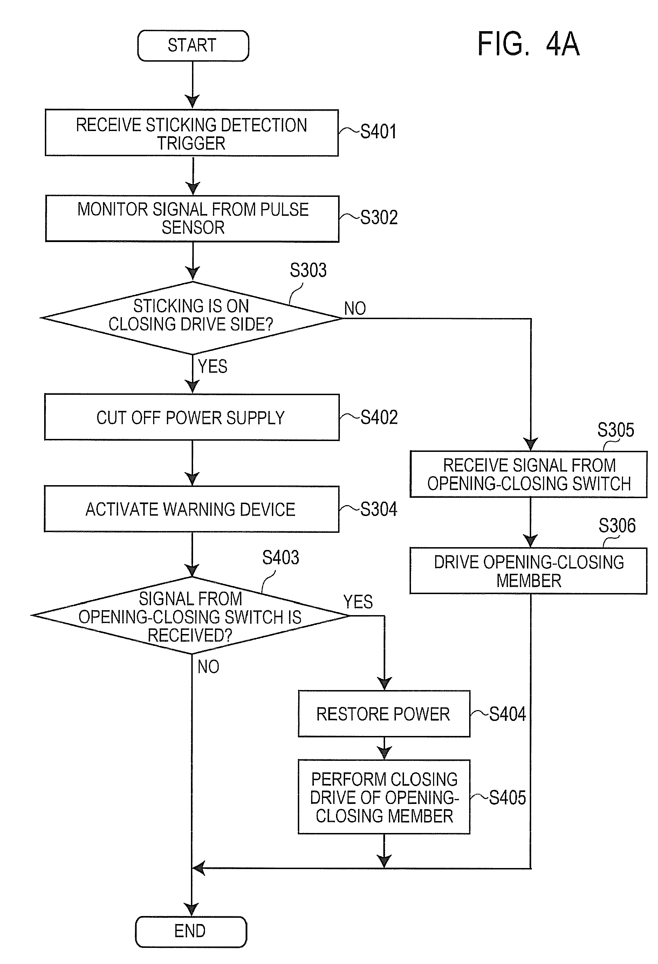

Fig. 4A is a flowchart of control of a roof panel 102a being the opening-closing member which is performed by a control device 200 for the vehicle opening-closing member. Note that steps S302 to S306 are the same as those in the first embodiment and description thereof is omitted. Moreover, step S304 may be omitted.

In step S401, a user operates an opening-closing switch 110, and a controller 201 receives a signal instructing opening drive or closing drive of the roof panel 102a from the opening-closing switch 110. In the embodiment, a sticking detection trigger is assumed to be the signal from the opening-closing switch 110 instructing the opening drive or the closing drive of the roof panel 102a.

When relays 206, 207 are stuck on the closing drive side (Yes in S303), the controller 201 outputs a control signal to a power supply cut-off circuit 211 in step S402. In response to this control signal, the power supply cut-off circuit 211 cuts off supply of power to a drive motor 209. This stops rotation of the drive motor 209.

In step S403, the controller 201 determines presence or absence of reception of the signal instructing the closing drive of the roof panel 102a from the opening-closing switch 110. When the user operates the opening-closing switch 110 and desires to close the roof panel 102a, the controller 201 executes steps S404, 405 and improves convenience of the user.

When receiving the signal indicating the closing drive of the roof panel 102a (Yes in S403), the controller 201 outputs a control signal to the power supply cut-off circuit 211 in step S404. In response to this control signal, the power supply cut-off circuit 211 restores supply of power to the drive motor 209 and a battery voltage (V_{B}) of a battery power supply +B is supplied to the drive motor 209.

In step S405, supplying the battery voltage (V_{B}) of the battery power supply +B to the drive motor 209 causes the drive motor 209 to rotate in a normal direction and perform the closing drive of the roof panel 102a.

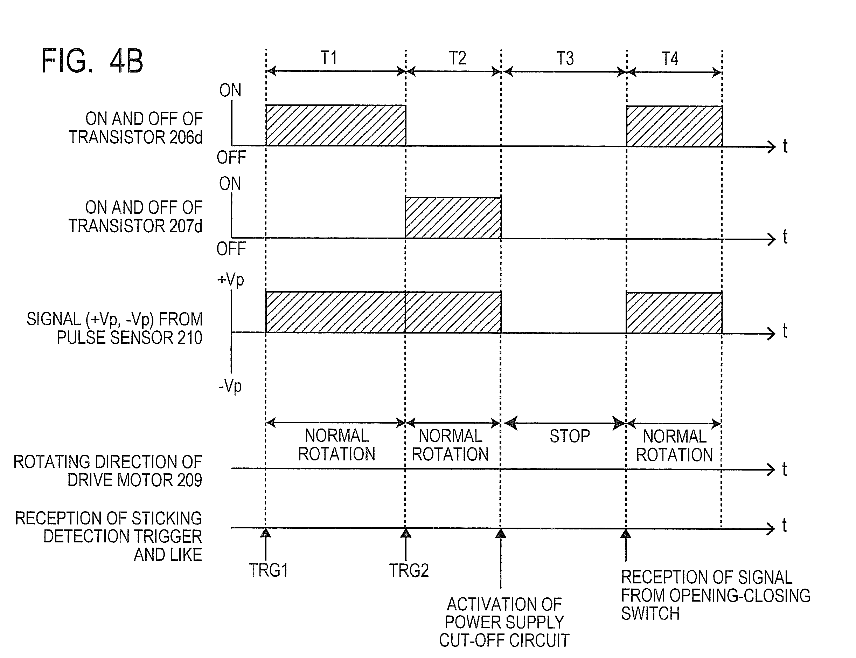

The flowchart of the control in the embodiment is further described with reference to Fig. 4B. Fig. 4B is a timing chart depicting relationships among ON and OFF of a transistor 206d, ON and OFF of a transistor 207d, the signal from the pulse sensor 210, the rotating direction of the drive motor 209, and the reception of the sticking detection trigger and the like. The following case is assumed.

In a first period T1, the opening-closing switch 110 is operated, and the controller 201 turns ON the transistor 206d and turns OFF the transistor 207d to cause the drive motor 209 to rotate in the normal direction. A sticking detection trigger TRG1 is inputted in response to the operation of the opening-closing switch 110 (S401), and the controller 201 monitors the signal from the pulse sensor 210 (S302). The rotating direction (normal direction) of the drive motor 209 indicated by the signal (+ Vp) from the pulse sensor 210 matches the rotating direction (normal direction) intended by the controller 201. Accordingly, the controller 201 determines that the relays 206, 207 are not stuck on the closing drive side (No in S303).

In a subsequent second period T2, the opening-closing switch 110 is further operated, and the controller 201 turns OFF the transistor 206d and turns ON the transistor 207d to cause the drive motor 209 to rotate in a reverse direction. The sticking detection trigger TRG1 is inputted in response to the operation of the opening-closing switch 110 (S401), and the controller 201 monitors the signal from the pulse sensor 210 (S302). The rotating direction (normal direction) of the drive motor 209 indicated by the signal (+ Vp) from the pulse sensor 210 does not match the rotating direction (reverse direction) intended by the controller 201. Accordingly, the controller 201 determines that the relays 206, 207 are stuck on the closing drive side (No in S303).

In a subsequent period T3, the controller 201 outputs a control signal to the power supply cut-off circuit 211 and the power supply cut-off circuit 211 cuts-off the supply of power to the drive motor 209 in response to the control signal (S402). The rotation of the drive motor 209 is thereby stopped.

In a subsequent fourth period T4, the controller 201 receives the signal indicating the closing drive of the roof panel 102a from the opening-closing switch 110 (Yes in S403). The user operates the opening-closing switch 110 and desires to close the roof panel 102a. Accordingly, the controller 201 outputs a control signal to the power-supply cut-off circuit 211 and the power supply cut-off circuit restores the supply of power to the drive motor 209 in response to this control signal (S404). Then, supplying the battery voltage (V_{B}) of the battery power supply +B to the drive motor 209 causes the drive motor 209 to rotate in the normal direction, and the roof panel 102a is driven to close (S405).

As described above, the control device and the control method for the vehicle opening-closing member in the embodiment stop the supply of power to the drive motor and stop the rotation of the drive motor when the sticking of the relays is detected. Accordingly, the control device and the control method for the vehicle opening-closing member in the embodiment can stop the opening-closing member and release load applied to an object when the object is trapped in a situation where the relays are stuck. Moreover, the control device and the control method for the vehicle opening-closing member in the embodiment improve the convenience of the user and also improve the security performance and product value of the vehicle by enabling the closing drive of the opening-closing member in response to the operation by the user even in the situation where the relays are stuck. The control device and the control method for the vehicle opening-closing member in the embodiment thereby achieve fail-safe against the sticking of relays.

### [Third Embodiment]

Description is given of a control device and a control method for a vehicle opening-closing member in a third embodiment of the present invention.

### <Control Device of Vehicle Opening-Closing Member>

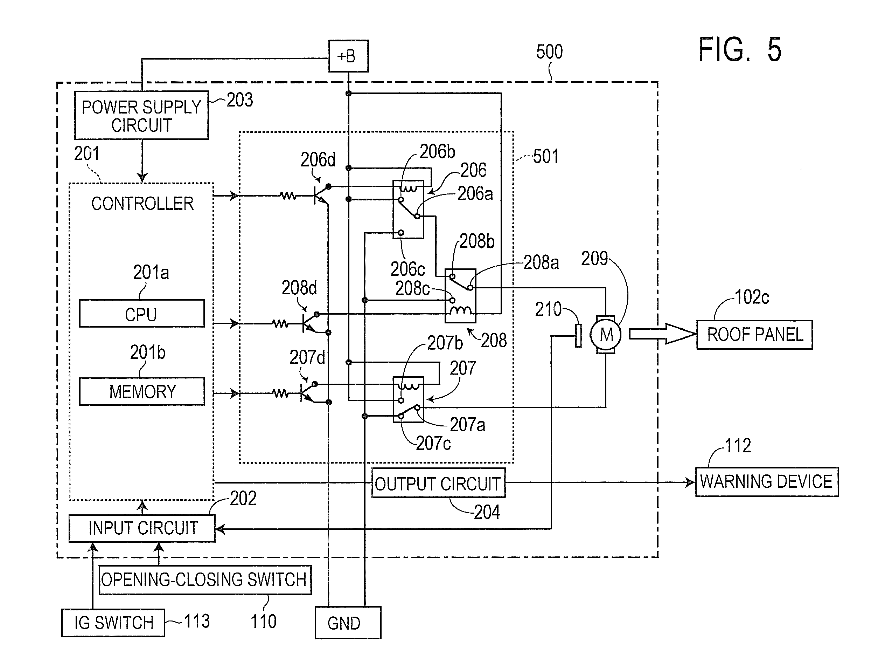

Fig. 5 is a block diagram of a control device 500 for the vehicle opening-closing member. As illustrated in Fig. 5, the control device 500 includes a controller 201, an input circuit 202, a power supply circuit 203, an output circuit 204, a drive circuit 501, a drive motor 209, and a pulse sensor 210. Note that the control device 500 may further include hardware elements such as a power supply cut-off circuit 211 as well as an oscillator and a counter circuit which supply a clock frequency. Moreover, the configurations of the controller 201, the input circuit 202, the power supply circuit 203, and the output circuit 204 are substantially the same as those in the first embodiment, and description thereof is omitted.

The drive circuit 501 includes relays 206 to 208 and transistors 206d to 208d and is different from the drive circuit 205 in the first embodiment in that the drive circuit 501 further includes the emergency relay 208 (emergency switching portion) and the transistor 208d. A terminal 206b of the relay 206 is connected to a battery power supply +B, a terminal 206c of the relay 206 is connected to the ground GND, and a terminal 206a of the relay 206 is connected to a terminal 208b of the relay 208. The terminal 208b of the relay 208 is connected to the terminal 206a of the relay 206, a terminal 208c of the relay 208 is connected to the ground GND, and a terminal 208a of the relay 208 is connected to the drive motor 209. Moreover, a terminal 207a of the relay 207 is connected to the drive motor 209, a terminal 207b of the relay 207 is connected to the battery power supply +B, and a terminal 207c of the relay 207 is connected to the ground GND. Note that the drive circuit 501 may include other elements such as a resistance and a capacitor as necessary.

The controller 201 controls currents flowing through solenoids of the relays 206 to 208 by turning ON and OFF the transistors 206d to 208d and thereby switches connection destinations of the relays 206 to 208. The terminal 208a of the relay 208 is in a state connected to the ground GND by default and is connected to the relay 206 while the transistor 208d is set to ON. The controller 201 connects the terminal 208a of the relay 208 to the relay 206 (connects the terminals 208b and 208a) by turning ON the transistor 208d and connects the relay 208 to the ground GND (connects the terminals 208c and 208a) by turning OFF the transistor 208d. Note that, since control of the relays 206, 207 is the same as that in the first embodiment, the description thereof is omitted.

To put it differently, the controller 201 can cause the drive motor 209 to rotate in a normal direction and perform closing drive of the roof panel 102a by connecting the relay 206 to the battery power supply +B, connecting the relay 208 to the relay 206, and connecting the relay 207 to the ground GND. Meanwhile, the controller 201 can cause the drive motor 209 to rotate in the reverse direction and perform opening drive of the roof panel 102a by connecting the relay 207 to the battery power supply +B and connecting the relay 208 to the ground GND. Moreover, the controller 201 can cause the drive motor 209 to rotate in the reverse direction and perform opening drive of the roof panel 102a by connecting the relay 207 to the battery power supply +B, connecting the relay 208 to the relay 206, and connecting the relay 206 to the ground GND. Furthermore, the controller 201 can stop the rotation of the drive motor 209 and stop the roof panel 102a by connecting both of the relay 206 and the relay 207 to the battery power supply +B or the ground GND. Moreover, the controller 201 can stop the rotation of the drive motor 209 and stop the roof panel 102a by connecting both of the relay 207 and the relay 208 to the ground GND. As described above, the controller 201 can control the start and stop of the rotation of the drive motor 209 as well as the direction (normal direction or reverse direction) of the rotation by controlling the voltage supplied from the battery power supply +B of the vehicle to the drive motor 209.

Table 2 depicts relationships among ON and OFF of the transistors 206d to 208d and the normal rotation, the reverse rotation, and the stop of the drive motor 209. Note that ON and OFF of the transistors 206d to 208d may be opposite to those depicted below.

**[Table 2]**

| | 207d is OFF | | 207d is ON | |
|---|---|---|---|---|
| | 208d is ON | 208d is OFF | 208d is ON | 208d is OFF |
| 206d is ON | Normal Rotation | Stop | Stop | Reverse Rotation |
| 206d is OFF | Stop | Stop | Reverse Rotation | Reverse Rotation |

### <Method of Controlling Vehicle Opening-Closing Member>

Description is given of a method of controlling the vehicle opening-closing member by the control device in the embodiment. After receiving a sticking detection trigger, the control device in the embodiment performs monitoring for presence or absence of sticking of the relays 206, 207 on the closing drive side. When the sticking is present, the control device connects the emergency relay 208 to the ground GND and stops the rotation of the drive motor.

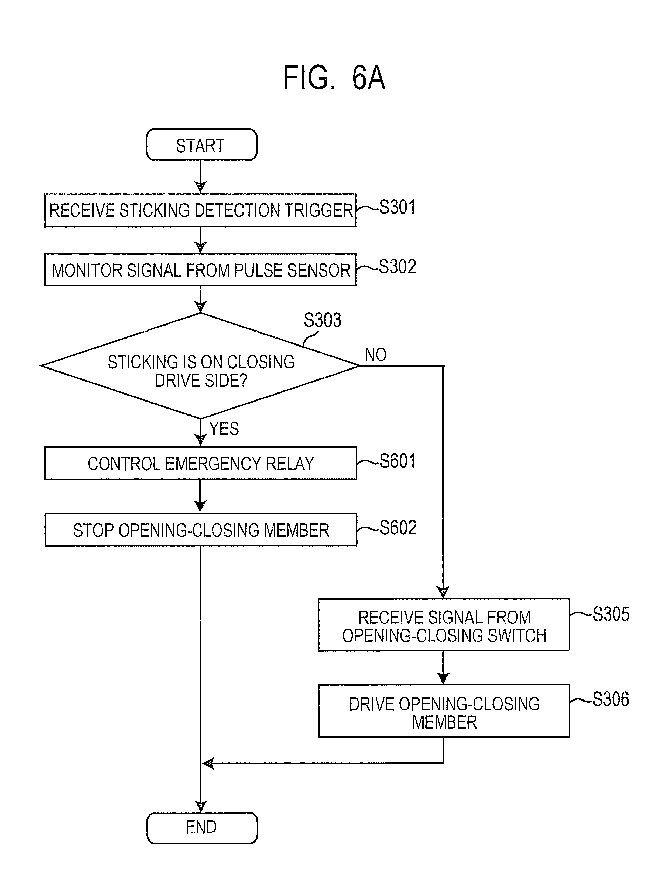

Fig. 6A is a flowchart of control of the roof panel 102a being the opening-closing member which is performed by the control device 500 for the vehicle opening-closing member. Note that steps S301 to S303 and steps S305 to S306 are the same as those in the first embodiment and description thereof is omitted.

When the relays 206, 207 are stuck on the closing drive side (Yes in step S303), the controller 201 turns OFF the transistor 208d to connect the emergency relay 208 to the ground GND in step S601. In step S602, the controller 201 stops the rotation of the drive motor 209 and stops the closing drive of the roof panel 102a.

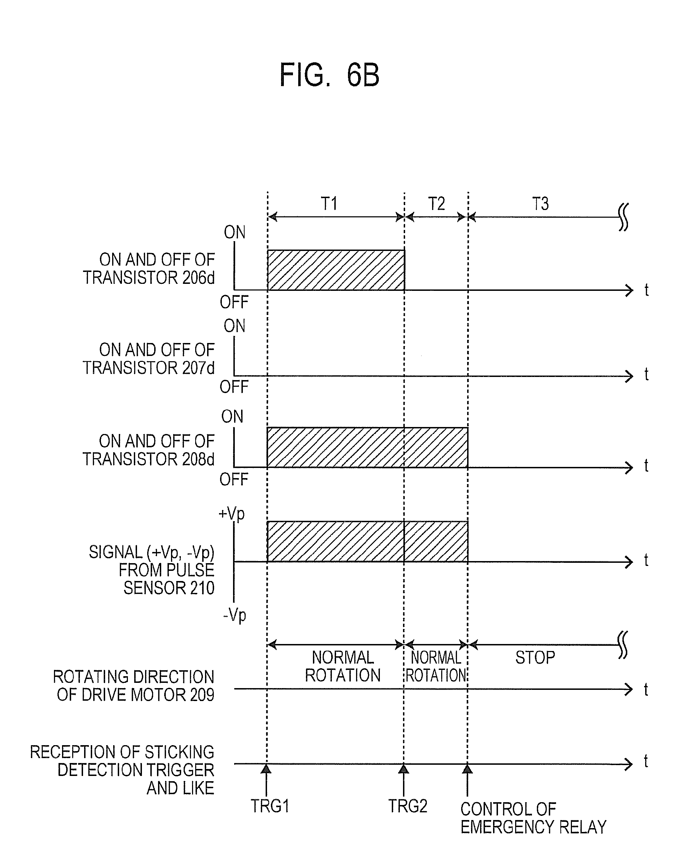

The flowchart of the control in the embodiment is further described with reference to Fig. 6B. Fig. 6B is a timing chart depicting relationships among ON and OFF of the transistor 206d, ON and OFF of the transistor 207d, ON and OFF of the transistor 208d, the signal from the pulse sensor 210, the rotating direction of the drive motor 209, and the reception of the sticking detection trigger and the like. The following case is assumed.

In the first period T1, the controller 201 receives a signal indicating the closing drive of the roof panel 102a from the opening-closing switch 110, as a sticking detection trigger TRG1 (S301). The controller 201 turns ON the transistor 206d and turns OFF the transistor 207d to cause the drive motor 209 to rotate in the normal direction. Then the controller 201 monitors a signal from the pulse sensor 210 (S302). The rotating direction (normal direction) of the drive motor 209 indicated by the signal (+ Vp) from the pulse sensor 210 matches the rotating direction (normal direction) intended by the controller 201. Accordingly, the controller 201 determines that the relays 206, 207 are not stuck on the closing drive side (No in S303).

In a subsequent period T2, the controller 201 receives a signal indicating completion of the drive of the roof panel 102a, as a sticking detection trigger TRG2 (S301). Then the controller 201 monitors the signal from the pulse sensor 210 (S302). Although the controller 201 is not causing the drive motor 209 to rotate, the signal (+Vp) from the pulse sensor 210 indicates that the drive motor 209 is rotating in the normal direction. Accordingly, the controller 201 determines that the relays 206, 207 are stuck on the closing drive side (Yes in S303).

In a subsequent third period, the controller 201 turns OFF the transistor 208d to connect the relay 208 to the ground GND (S601). The rotation of the drive motor 209 is thereby stopped.

As described above, the control device and the control method for the vehicle opening-closing member in the embodiment connect the emergency relay 208 to the ground GND and stop the rotation of the drive motor when the sticking of the relays 206, 207 is detected. Accordingly, the control device and the control method for the vehicle opening-closing member in the embodiment can stop the opening-closing member and release load applied to an object when the object is trapped in a situation where the relays are stuck. The control device and the control method for the vehicle opening-closing member in the embodiment thereby achieve fail-safe against the sticking of relays.

### [Other Embodiments]

In the first to third embodiments, the control device for the vehicle opening-closing member may be configured such that PWM (Pulse Width Modulation) control is performed as the control of the drive motor 209 and FETs (Field Effect Transistors) are used as the switching portions instead of the relays 206 to 208. Specifically, even when the FETs are always set to ON or OFF due to failure, fail safe against failure can be achieved by detecting the rotating direction of the drive motor. Note that the configuration in which the FETs are used as the switching portions instead of the relays can be described in a similar way by replacing "sticking of the relays" to "failure of the FETs" in the description of the first to fourth embodiments.

This application claims the benefit of priority of Japanese Patent Application No. 2013-224064 filed on October 29, 2013, and contents thereof is incorporated herein by reference as part of the application.

### Explanation of the Reference Numerals

102 opening-closing member
110 opening-closing switch (opening-closing instruction portion)
112 warning device
113 IG switch
200 control device of vehicle opening-closing member
201 controller
202 input circuit
203 power supply circuit
204 output circuit
205 drive circuit
206 relay (switching portion)
207 relay (switching portion)
208 relay (emergency switching portion)
209 drive motor
210 detector of rotating direction of drive motor (pulse sensor)
211 power supply cut-off circuit

## Claims

1. A control device for a vehicle opening-closing member, comprising:
a drive motor configured to perform closing drive of an opening-closing member provided in a vehicle by rotating in a first direction and perform opening drive of the opening-closing member by rotating in a second direction opposite to the first direction;
a controller configured to control a start operation of rotation of the drive motor and a direction of the rotation of the drive motor by outputting a control signal for switching connection of a switching portion; and
a detector configured to output a signal indicating the direction of the rotation of the drive motor to the controller, wherein
the controller determines presence or absence of sticking of the switching portion on the closing drive side, based on the signal from the detector, and
when determining that the sticking is present, the controller performs at least one of cut-off of supply of power to the drive motor and output of a control signal for activating a warning device configured to give warning to a user.

2. The control device for a vehicle opening-closing member according to claim 1, wherein in the determination of presence or absence of the sticking, the controller determines that the sticking is present when receiving a signal indicating that the drive motor is rotating in the first direction from the detector while the drive motor is not being rotated.

3. The control device for a vehicle opening-closing member according to claim 1 or 2, wherein in the determination of presence or absence of the sticking, the controller determines that the sticking is present when receiving a signal indicating that the drive motor is rotating in the first direction from the detector after outputting the control signal for switching connection of the switching portion to cause the drive motor to rotate in the second direction.

4. The control device for a vehicle opening-closing member according to any one of claims 1 to 3, further comprising an opening-closing instruction portion configured to output an opening-closing signal instructing the opening drive or the closing drive of the opening-closing member, wherein
the controller restores the supply of power to the drive motor when receiving the signal instructing the closing drive of the opening-closing member from the opening-closing instruction portion after outputting a control signal for cutting-off the supply of power to the drive motor.

5. The control device for a vehicle opening-closing member according to any one of claims 1 to 4, wherein the controller stops the rotation of the drive motor by outputting a control signal for switching connection of an emergency switching portion provided separately from the switching portion.

6. A control method for a vehicle opening-closing member, comprising the steps of:
outputting a control signal for switching connection of a switching portion to stop rotation of a drive motor of an opening-closing member provided in a vehicle;
inputting a signal indicating that the drive motor is rotating in a direction of performing closing drive of the opening-closing member;
determining whether the switching portion is stuck on the closing drive side, based on the signal indicating that drive motor is rotating in the direction of performing the closing drive of the opening-closing member; and
performing at least one of cut-off of supply of power to the drive motor and output of a control signal for activating a warning device configured to give warning to a user.

7. A control method for a vehicle opening-closing member, comprising the steps of:
outputting a control signal for switching connection of a switching portion to cause a drive motor to rotate such that an opening operation of an opening-closing member provided in a vehicle is performed;
inputting a signal indicating that the drive motor is rotating in a direction of closing drive of the opening-closing member;
determining that the switching portion is stuck on the closing drive side, based on the signal indicating that drive motor is rotating in the direction of the closing drive of the opening-closing member; and
performing at least one of cut-off of supply of power to the drive motor and output of a control signal for activating a warning device configured to give warning to a user.

8. The control method for a vehicle opening-closing member according to claim 6 or 7, further comprising the steps of:
inputting a signal instructing the closing drive of the opening-closing member after the cut-off of the supply of power to the drive motor; and
restoring the supply of power to the drive motor.
